# EUROPEAN PATENT APPLICATION

(11) **EP 4 678 275 A1**
(43) Date of publication of application: **14.01.2026**
(21) Application number: 23926531.7
(22) Date of filing: 27.11.2023
(51) Int. Cl.: B01D 65/02, A01N 37/36, A01P 15/00

(54) **PRESERVATION SOLUTION FOR SEPARATION MEMBRANE AND WATER TREATMENT SEPARATION MEMBRANE PACKAGING CONTAINER COMPRISING SAME**

(30) Priority: 06.03.2023 KR 20230029336
(71) Applicant: Toray Advanced Materials Korea Inc., Gumi-si, Gyeongsangbuk-do 39389 (KR)
(72) Inventor: LEE, Daewon, Gumi-si, Gyeongsangbuk-do 39389 (KR)
(74) Representative: SONN Patentanwälte GmbH & Co KG
(86) International application number: PCT/KR2023/019193
(87) International publication number: WO 2024/185959

(57) **Abstract**

The present invention relates to a preservation solution for a separation membrane and a water treatment separation membrane packaging container comprising the same, wherein the water treatment separation membrane stored in the preservation solution for the separation membrane does not experience a significant reduction in salt rejection rate even when stored in the preservation solution for the separation membrane, water treatment equipment does not experience deformation even when the water treatment separation membrane stored in the preservation solution for the separation membrane is used in the water treatment equipment, and bacteria does not propagate even during the time the water treatment separation membrane is stored in the preservation solution for the separation membrane.

## Description

### TECHNICAL FIELD

The present invention relates to a preservation solution for a separation membrane and a water treatment separation membrane packaging container including the same, wherein the water treatment separation membrane stored in the preservation solution for the separation membrane according to the present invention does not experience a significant reduction in salt rejection rate even when stored in the preservation solution for the separation membrane, water treatment equipment does not experience deformation even when the water treatment separation membrane stored in the preservation solution for the separation membrane is used in the water treatment equipment, and bacteria do not propagate even during the time the water treatment separation membrane is stored in the preservation solution for the separation membrane.

### BACKGROUND ART

Depending on their pore size, separation membranes are classified into microfiltration (MF) membranes, ultrafiltration (UF) membranes, nanofiltration (NF) membranes or reverse osmosis (RO) membranes. Among these, ultrafiltration membranes are generally defined as membranes that are capable of separating colloidal substances and polymer solutions with molecular weights of 1,000 to 300,000.

Specifically, ultrafiltration membranes were previously made of cellulose, but recently, with the development of synthetic polymer chemistry, membranes with excellent permeability using hydrophilic polymers such as polyvinyl alcohol have been developed. Unlike reverse osmosis membranes, ultrafiltration membranes are often used to obtain concentrated water rather than permeate water, and are used in food waste treatment, pharmaceutical refining and electrical coating. Korean Patent No. 0815276 discloses a pharmaceutical composition including a high ratio of panaxadiol-series saponin fraction separated from red ginseng by ultrafiltration, and ultrafiltration is also utilized for the concentration and purification of foods.

The nanofiltration membrane is typically defined as a membrane that is capable of separating compounds having a molecular weight of less than 1,000. Specifically, it is a membrane that is capable of selectively separating solutes in the nanometer range, has a high salt rejection rate for divalent ions and a relatively wide salt rejection rate of more than 40% for monovalent ions, and has a water permeability that is 5 to 10 times greater than that of a reverse osmosis membrane using a polyfunctional aromatic amine. In particular, there is an advantage in that a representative unpleasant odor substance such as geosmin is removed by the nanofiltration membrane, and water quality can be produced in which pollutants generated during water treatment such as nitrate nitrogen and trihalogen methane are removed.

The reverse osmosis membrane is a separation membrane that can remove monovalent ions or salts that cannot be removed by microfiltration (MF) or ultrafiltration (UF), and is effectively used in a desalination process for obtaining water from seawater or brine for use in beverages, agriculture or other purposes. In order for a reverse osmosis membrane to have characteristics that are suitable for its intended use, it must have high salt rejection and high flux. In other words, a reverse osmosis membrane must be able to pass a large amount of water through the membrane under a relatively low pressure to be commercially applicable to a desalination process.

The membranes described above are commonly stored and distributed after being manufactured to prevent degradation in the performance during storage, distribution and use, or when the membranes described above are used for food and beverages, they are generally stored and distributed with a preservative solution added to prevent growth by microorganisms or mold.

The preservation solution was previously used by adding sodium bisulfite thereto to prevent the growth of microorganisms or molds. However, the preservation solution containing sodium bisulfite has a problem in that it causes damage to parts that are made of a polyacetal material in devices equipped with separation membranes or modules including the same, such as water purifiers, and in the case of parts that are made of silicone, it has a problem in that it causes discoloration and deformation.

In addition, when using chitosan or chitooligosaccharide among conventional preservation solutions, there were problems in that the price was high and the process of dissolving the same in the solution was complicated, which increased the production time and unit price.

### DISCLOSURE

### TECHNICAL PROBLEM

The present invention has been devised to solve the above problems, and an object of the present invention is to provide a preservation solution for a separation membrane and a water treatment separation membrane packaging container including the same, wherein the water treatment separation membrane stored in the preservation solution for the separation membrane according to the present invention does not experience a significant reduction in salt rejection rate even when stored in the preservation solution for the separation membrane, water treatment equipment does not experience deformation even when the water treatment separation membrane stored in the preservation solution for the separation membrane is used in the water treatment equipment, and bacteria do not propagate even during the time the water treatment separation membrane is stored in the preservation solution for the separation membrane.

### TECHNICAL SOLUTION

In order to solve the above-described problems, the preservation solution for a separation membrane according to the present invention may include an aqueous citric acid solution.

In a preferred embodiment of the present invention, the preservation solution for a separation membrane may be composed of an aqueous citric acid solution.

In a preferred embodiment of the present invention, the aqueous citric acid solution may include 0.3 to 1.5 wt% of citric acid based on a total weight%.

In a preferred embodiment of the present invention, the aqueous citric acid solution may include 0.3 to 0.8 wt% of citric acid based on a total weight%.

In a preferred embodiment of the present invention, the aqueous citric acid solution may have a pH of 2.0 to 4.0.

Meanwhile, the water treatment separation membrane packing container of the present invention is a water treatment separation membrane packaging container having an accommodating part that is capable of accommodating contents inside, wherein a water treatment separation membrane and the preservation solution for a separation membrane according to the present invention may be accommodated in the accommodating part, and the water treatment separation membrane may be immersed in the preservation solution for a separation membrane.

In a preferred embodiment of the present invention, the water treatment separation membrane may include any one or more polymer materials selected from the group consisting of polysulfone-based polymers, polyamide-based polymers, polyimide-based polymers, polyester-based polymers, olefin-based polymers, fluorinated polymers, polybenzimidazole polymers and polyacrylonitrile.

In a preferred embodiment of the present invention, the water treatment separation membrane may be a flat membrane or a hollow fiber membrane.

In a preferred embodiment of the present invention, the water treatment separation membrane may be a cylindrical water treatment separation membrane module.

### ADVANTAGEOUS EFFECTS

In the preservation solution for a separation membrane and the water treatment separation membrane packaging container including the same according to the present invention, the water treatment separation membrane stored in the preservation solution for the separation membrane according to the present invention does not experience a significant reduction in salt rejection rate even when stored in the preservation solution for the separation membrane, water treatment equipment does not experience deformation even when the water treatment separation membrane stored in the preservation solution for the separation membrane is used in the water treatment equipment, and bacteria do not propagate even during the time the water treatment separation membrane is stored in the preservation solution for the separation membrane.

### DESCRIPTION OF DRAWINGS

FIG. 1 is a photograph of a cylindrical water treatment separation membrane module manufactured in Preparation Example 1 that was sealed and vacuum-packed in a packaging material.
FIG. 2 is a photograph showing that the equipment was damaged, when the water treatment membrane module stored in the preservation solution for a separation membrane manufactured in Comparative Example 2 was placed into equipment for evaluating the performance of the water treatment membrane module and operated.
FIG. 3 is a photograph showing that bacteria propagated in a preservation solution for a separation membrane.
FIG. 4 is a photograph showing that bacteria did not propagate in a preservation solution for a separation membrane.

### MODES OF THE INVENTION

Hereinafter, with reference to the attached drawings, embodiments of the present invention will be described in detail so that those skilled in the art can easily practice the present invention. The present invention may be implemented in various different forms and is not limited to the embodiments described herein. In the drawings, parts that are not related to the description are omitted in order to clearly describe the present invention, and the same reference numerals are assigned to the same or similar components throughout the specification.

The preservation solution for a separation membrane according to the present invention may include an aqueous citric acid solution.

Specifically, the preservative solution for a separation membrane according to the present invention may be composed of an aqueous citric acid solution, and if the preservative solution for a separation membrane according to the present invention includes other components in addition to the aqueous citric acid solution, there may be a problem of the deterioration of physical properties.

In addition, the aqueous citric acid solution may include 0.3 to 1.5 wt% of citric acid, preferably 0.3 to 1.2 wt%, and more preferably 0.3 to 0.8 wt% of citric acid based on the total weight%. If the citric acid is included in an amount of less than 0.3 wt%, there may be a problem of microbial growth, and if it is more than 1.5 wt%, there may be a problem of precipitation when stored at a high temperature of 40°C or higher.

In addition, the pH of the aqueous citric acid solution may be 2.0 to 4.0, preferably 2.3 to 3.5, and more preferably 2.5 to 3.0. If the pH is less than 2.0, there may be a problem of the deformation of components during long-term storage, and if the pH is more than 4.0, there may be a problem of microbial growth.

Meanwhile, the water treatment membrane packaging container of the present invention is a water treatment membrane packaging container having an accommodating part that is capable of containing contents inside, wherein a water treatment membrane and the preservation solution for a separation membrane according to the present invention may be accommodated in the accommodating part, and the water treatment membrane may be immersed in the preservation solution for a separation membrane.

The shape of a separation membrane is not limited as long as it is a conventional membrane shape, and may be, for example, a flat membrane or a hollow fiber membrane. The separation membrane may be used regardless of the purpose of use, that is, a precision filtration membrane, an ultrafiltration membrane, a nanofiltration separation membrane or a reverse osmosis membrane depending on the pore size, and may be used as a reverse osmosis membrane, a pressure retarding osmosis membrane or a forward osmosis membrane depending on the osmosis method. However, most preferably, the separation membrane of the present invention may be a cylindrical water treatment separation membrane module.

The material of a separation membrane may include materials used in conventional membranes, and preferably may include any one or more polymer materials selected from the group consisting of polysulfone-based polymers, polyamide-based polymers, polyimide-based polymers, polyester-based polymers, olefin-based polymers, fluorinated polymers, polybenzimidazole polymers and polyacrylonitrile.

In the case of a fluorinated polymer, specifically, it may be any one or more selected from the group consisting of polyvinylidene fluoride (PVDF), polytetrafluoroethylene (PTFE), tetrafluoroethylene-perfluoroalkyl vinyl ether copolymer (PFA), tetrafluoroethylene-hexafluoropropylene copolymer (FEP), tetrafluoroethylene-hexafluoropropylene-perfluoroalkyl vinyl ether copolymer (EPE), tetrafluoroethylene-ethylene copolymer (ETFE), polychlorotrifluoroethylene (PCTFE) and chlorotrifluoroethylene-ethylene copolymer (ECTFE).

Although the present invention has been described above with reference to embodiments, these are merely examples and do not limit the embodiments of the present invention. Those skilled in the art to which the embodiments of the present invention pertain will appreciate that various modifications and applications that are not exemplified above are possible without departing from the essential characteristics of the present invention. For example, each component specifically shown in the embodiments of the present invention can be modified and implemented. In addition, differences related to such modifications and applications should be interpreted as being included in the scope of the present invention defined in the appended claims.

### Preparation Example 1: Manufacturing of a cylindrical water treatment separation membrane module

(1) A solution for forming a porous support layer was prepared by dissolving Udel P-3500, which is a polysulfone-based polymer resin sold by Solvay, in dimethylformamide (DMF), which is a polar aprotic organic solvent. In this case, the solution for forming a porous support layer was prepared by mixing 17.5 wt% of Udel P-3500 and 82.5 wt% of dimethylformamide based on the total weight%.
(2) A non-woven fabric (polyester-based synthetic fiber, thickness: 90 µm) was prepared as a substrate, and the solution for forming a porous support layer was cast on one surface of the prepared non-woven fabric to an average thickness of 120 µm, and the solution was immersed in distilled water at 25°C to cause a phase change, and then washed to replace the solvent of the solution for forming a porous support layer with the distilled water, thereby forming a porous support layer on one surface of the substrate. Thereafter, the solution was stored in pure water at room temperature (25°C).
(3) A substrate having a porous support layer formed on one surface thereof was immersed in an aqueous solution including 1.5 wt% of metaphenylenediamine for 1 minute, surface water was removed by pressing, and then, the substrate was immersed in an organic solution including 0.1 wt% of trimesoyl chloride for 1 minute to perform interfacial polymerization. Thereafter, the substrate was naturally dried at room temperature (25°C) for 1 minute and 30 seconds to form a polyamide active layer composed of a polyamide-based polymer compound with an average thickness of 0.2 µm on one surface of the porous support layer, thereby manufacturing a separation membrane for water treatment.
(4) A plurality of manufactured water treatment membranes were prepared, and a plurality of water treatment membranes were rolled to manufacture a plurality of cylindrical water treatment separation membrane modules having a diameter of 45.5 mm and a length of 183.5 mm.

### Example 1: Preparation of preservative solution for separation membrane

A preservation solution for a separation membrane having a pH of 2.88 was prepared by dissolving citric acid in distilled water. In this case, the preservation solution for a separation membrane was prepared by mixing 0.4 wt% of citric acid and 99.6 wt% of distilled water based on the total weight%.

### Example 2: Preparation of preservative solution for separation membrane

A preservation solution for a separation membrane having a pH of 2.5 was prepared by dissolving citric acid in distilled water. In this case, the preservation solution for a separation membrane was prepared by mixing 1.2 wt% of citric acid and 98.8 wt% of distilled water based on the total weight%.

### Example 3: Preparation of preservative solution for separation membrane

A preservation solution for a separation membrane having a pH of 3.6 was prepared by dissolving citric acid in distilled water. In this case, the preservation solution for a separation membrane was prepared by mixing 0.2 wt% of citric acid and 99.8 wt% of distilled water based on the total weight%.

### Example 4: Preparation of preservative solution for separation membrane

Citric acid and sodium benzoate were dissolved in distilled water to prepare a preservation solution for a separation membrane having a pH of 4.86. In this case, the preservation solution for a separation membrane was prepared by mixing 0.2 wt% of citric acid, 0.2 wt% of sodium benzoate and 99.6 wt% of distilled water based on the total weight%.

### Example 5: Preparation of preservative solution for separation membrane

Citric acid and sodium benzoate were dissolved in distilled water to prepare a preservation solution for a separation membrane having a pH of 4.55. In this case, the preservation solution for a separation membrane was prepared by mixing 0.4 wt% of citric acid, 0.2 wt% of sodium benzoate and 99.4 wt% of distilled water based on the total weight%.

### Comparative Example 1: Preparation of preservation solution for separation membrane

A preservation solution for a separation membrane having a pH of 3.8 was prepared by dissolving sodium metabisulfite in distilled water. In this case, the preservation solution for a separation membrane was prepared by mixing 1.0 wt% of sodium metabisulfite and 99.0 wt% of distilled water based on the total weight%.

### Comparative Example 2: Preparation of preservation solution for separation membrane

A preservation solution for a separation membrane having a pH of 3.57 was prepared by dissolving sodium metabisulfite in distilled water. In this case, the preservation solution for a separation membrane was prepared by mixing 1.5 wt% of sodium metabisulfite and 98.5 wt% of distilled water based on the total weight%.

### Comparative Example 3: Preparation of preservation solution for separation membrane

A preservation solution for a separation membrane having a pH of 4.5 was prepared by dissolving benzoic acid in distilled water. In this case, the preservation solution for a separation membrane was prepared by mixing 0.1 wt% of benzoic acid and 99.9 wt% of distilled water based on the total weight%.

### Comparative Example 4: Preparation of Preservation Solution for Membrane

A preservation solution for a separation membrane having a pH of 3.28 was prepared by dissolving benzoic acid in distilled water. In this case, the preservation solution for a separation membrane was prepared by mixing 0.2 wt% of benzoic acid and 99.8 wt% of distilled water based on the total weight%.

### Comparative Example 5: Preparation of Preservation Solution for Membrane

A preservation solution for a separation membrane having a pH of 3.7 was prepared by dissolving benzoic acid and sodium benzoate in distilled water. In this case, the preservation solution for a separation membrane was prepared by mixing 0.1 wt% of benzoic acid, 0.2 wt% of sodium benzoate and 99.7 wt% of distilled water based on the total weight%.

### Comparative Example 6: Preparation of Preservation Solution for Membrane

A preservation solution for a separation membrane having a pH of 3.4 was prepared by dissolving benzoic acid and sodium benzoate in distilled water. In this case, the preservation solution for a separation membrane was prepared by mixing 0.2 wt% of benzoic acid, 0.2 wt% of sodium benzoate and 99.6 wt% of distilled water based on the total weight%.

### Experimental Example 1: Performance measurement of cylindrical water treatment separation membrane module before and after storage in preservation solution for separation membrane

In order to stabilize the equipment for evaluating the performance of a water treatment membrane module, a preliminary operation was performed for 15 minutes using reverse osmosis distilled water. Thereafter, for a plurality of cylindrical water treatment separation membrane modules manufactured in Preparation Example 1, each was operated for 10 minutes in a cross-flow mode using a 200 ppm sodium chloride aqueous solution at 25°C and 20 psi pressure, and stabilization was confirmed. Afterwards, the initial permeation flux and initial salt rejection rate were measured, and the results are shown in Table 1 below.

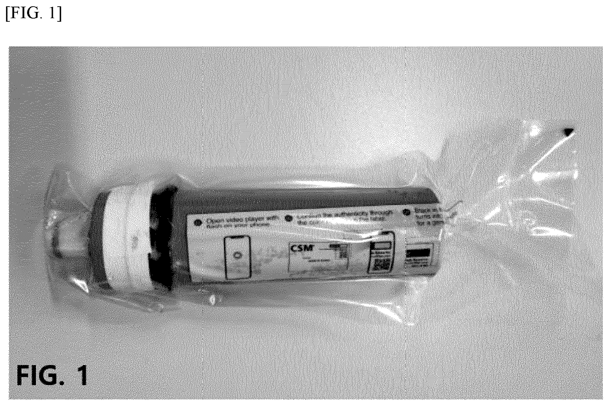

Thereafter, each of the cylindrical water treatment separation membrane modules manufactured in a plurality thereof in Preparation Examples 1 was immersed in the preservation solutions for separation membranes prepared in Examples 1 to 5 and Comparative Examples 1 to 6 for 10 minutes, and then placed inside a PE (polyethylene) packaging material. Thereafter, as illustrated in FIG. 1, a pressure of -400 mbar was applied to the PE packaging material, into which the cylindrical water treatment separation membrane modules manufactured in Preparation Example 1 were placed, for 2 seconds, and then sealed and vacuum-packed, and then stored for 2 weeks. For the cylindrical water treatment separation membrane modules manufactured in Preparation Example 1 stored in PE packaging for 2 weeks, a 200 ppm sodium chloride aqueous solution was used, and they were operated in a cross-flow mode at 25°C and 20 psi pressure for 10 minutes to confirm stabilization. Afterwards, the permeation flux after storage, the salt rejection rate after storage and the pH of the preservation solution for a separation membrane after storage were measured, and the results are shown in Table 1 below.

In addition, when operating the equipment to evaluate the performance of the water treatment membrane modules, the presence or absence of damage to the equipment valve was checked, and the results are shown in Table 1 below.

In addition, when storing the water treatment membrane modules in the preservation solution for a separation membrane, it was checked whether bacteria propagated or not, and the results are shown in Table 1 below.

**[Table 1]**

| Classifi cation | Initial | | | After 2 Weeks of Storage | | | Chan ge Amo unt of Salt Rejec tion Rate | Change Amount of pH of Preserv ation Solution | Whet her Valve is Dam aged | Wheth er Bacter ia Propa gate |
|---|---|---|---|---|---|---|---|---|---|---|
| | Perm eate Flux (GP D) | Salt Rejec tion Rate (%) | pH of Preserv ation Solution | Perm eate Flux (GP D) | Salt Rejec tion Rate (%) | pH of Preserv ation Solution | | | | |
| Example 1 | 20.2 | 95.4 | 2.88 | 19.5 | 95.2 | 2.84 | 0.2 | 0.04 | X | X |
| Example 2 | 19.6 | 95.5 | 2.5 | 19.2 | 95.1 | 2.47 | 0.4 | 0.03 | X | X |
| Example 3 | 19.6 | 95.8 | 3.6 | 19.8 | 94.7 | 3.57 | 0.9 | 0.03 | X | Propa gated after 3 days |
| Example 4 | 19.2 | 97.3 | 4.86 | 20.8 | 96.4 | 4.85 | 0.9 | 0.01 | X | X |
| Example 5 | 19.9 | 95.9 | 4.55 | 20.5 | 94.7 | 4.51 | 0.8 | 0.04 | X | X |
| Compar ative Example 1 | 18.9 | 96.9 | 3.8 | 19.8 | 96.8 | 3.77 | 0.1 | 0.03 | X | Propa gated after 9 days |
| Compar ative Example 2 | 18.6 | 97.1 | 3.57 | 19.5 | 97.1 | 3.55 | 0.0 | 0.02 | Dam aged | X |
| Compar ative Example 3 | 18.9 | 96.9 | 4.5 | 20.1 | 95.8 | 4.47 | 1.1 | 0.02 | X | Propa gated after 3 days |
| Compar ative Example 4 | 18.6 | 97.1 | 3.28 | 19.5 | 96.0 | 3.25 | 1.1 | 0.03 | X | X |
| Compar ative Example 5 | 19.2 | 97.2 | 3.7 | 20.1 | 94.3 | 3.68 | 2.9 | 0.02 | X | Propa gated after 10 days |
| Compar ative Example 6 | 19.8 | 97.1 | 3.4 | 20.1 | 94.9 | 3.37 | 2.2 | 0.03 | X | X |

As can be confirmed in Table 1 above, the water treatment membrane module stored in the preservation solution for a separation membrane prepared in Example 1 did not have a significantly reduced salt rejection rate even when it was stored in the preservation solution for a separation membrane, and when the water treatment membrane module stored in the preservation solution for a separation membrane was used in water treatment equipment, there was no deformation of the water treatment equipment, and it was confirmed that bacteria did not propagate during the time the water treatment membrane module was stored in the preservation solution for a separation membrane.

Meanwhile, compared to the water treatment membrane module stored in the preservation solution for a separation membrane prepared in Example 1, it was confirmed that the water treatment membrane module stored in the preservation solution for a separation membrane prepared in Example 2 showed an increase in the salt rejection rate change amount.

In addition, compared to the water treatment membrane module stored in the preservation solution for a separation membrane prepared in Example 1, the water treatment membrane module stored in the preservation solution for a separation membrane prepared in Example 3 not only showed an increase in salt rejection rate, but also showed bacterial growth.

In addition, compared to the water treatment membrane module stored in the preservation solution for a separation membrane prepared in Example 1, it was confirmed that the water treatment membrane module stored in the preservation solution for a separation membrane prepared in Example 4 showed an increase in the salt rejection rate change amount.

In addition, compared to the water treatment membrane module stored in the preservation solution for a separation membrane prepared in Example 1, it was confirmed that the water treatment membrane module stored in the preservation solution for a separation membrane prepared in Example 5 showed an increase in the salt rejection rate change amount.

In addition, compared to the water treatment membrane module stored in the preservation solution for a separation membrane prepared in Example 1, it was confirmed that bacteria propagated in the water treatment membrane module stored in the preservation solution for a separation membrane prepared in Comparative Example 1.

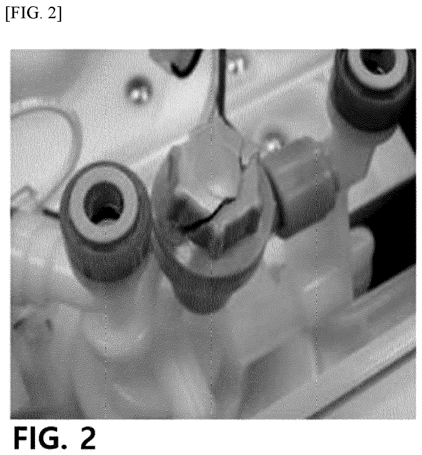

In addition, compared to the water treatment membrane module stored in the preservation solution for a separation membrane prepared in Example 1, it was confirmed that the water treatment membrane module stored in the preservation solution for a separation membrane prepared in Comparative Example 2 caused damage to the water treatment equipment and deformation of the water treatment equipment, as shown in FIG. 2.

In addition, compared to the water treatment membrane module stored in the preservation solution for a separation membrane prepared in Example 1, the water treatment membrane module stored in the preservation solution for a separation membrane prepared in Comparative Example 3 not only showed a significant increase in the salt rejection rate change amount, but also showed bacterial growth.

In addition, compared to the water treatment membrane module stored in the preservation solution for a separation membrane prepared in Example 1, it was confirmed that the water treatment membrane module stored in the preservation solution for a separation membrane prepared in Comparative Example 4 showed a significant increase in the salt rejection rate change amount.

In addition, compared to the water treatment membrane module stored in the preservation solution for a separation membrane prepared in Example 1, the water treatment membrane module stored in the preservation solution for a separation membrane prepared in Comparative Example 5 not only showed a significant increase in the salt rejection rate change amount, but also showed bacterial growth.

In addition, compared to the water treatment membrane module stored in the preservation solution for a separation membrane prepared in Example 1, it was confirmed that the water treatment membrane module stored in the preservation solution for a separation membrane prepared in Comparative Example 6 showed a significant increase in the salt rejection rate change amount.

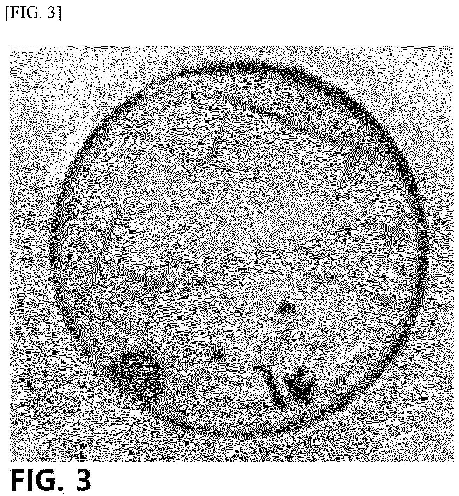

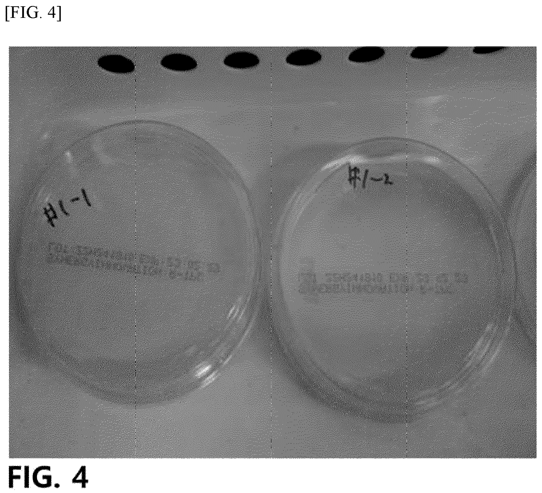

Additionally, as illustrated in FIG. 3, it was confirmed that bacteria propagated in the preservation solutions for separation membranes prepared in Example 3, Comparative Example 1, Comparative Example 3 and Comparative Example 5, and as illustrated in FIG. 4, bacteria did not propagate in the preservation solutions for separation membranes prepared in Examples 1 to 2, Examples 4 to 5, Comparative Example 2, Comparative Example 4 and Comparative Example 6.

Simple modifications or changes of the present invention can be easily implemented by those skilled in the art, and all such modifications or changes can be considered to be included in the scope of the present invention.

## Claims

1. A preservation solution for a separation membrane, comprising an aqueous citric acid solution.

2. The preservation solution of claim 1, wherein the preservation solution for a separation membrane is composed of an aqueous citric acid solution.

3. The preservation solution of claim 1, wherein the aqueous citric acid solution comprises 0.3 to 1.5 wt% of citric acid based on a total weight%.

4. The preservation solution of claim 3, wherein the aqueous citric acid solution comprises 0.3 to 0.8 wt% of citric acid based on a total weight%.

5. The preservation solution of claim 1, wherein the aqueous citric acid solution has a pH of 2.0 to 4.0.

6. A water treatment separation membrane packaging container having an accommodating part that is capable of accommodating contents inside, wherein a water treatment separation membrane and the preservation solution for a separation membrane according to claim 1 are accommodated in the accommodating part, and the water treatment separation membrane is immersed in the preservation solution for a separation membrane.

7. The water treatment separation membrane packaging container of claim 6, wherein the water treatment separation membrane comprises any one or more polymer materials selected from the group consisting of polysulfone-based polymers, polyamide-based polymers, polyimide-based polymers, polyester-based polymers, olefin-based polymers, fluorinated polymers, polybenzimidazole polymers and polyacrylonitrile.

8. The water treatment separation membrane packaging container of claim 6, wherein the water treatment separation membrane is a flat membrane or a hollow fiber membrane.

9. The water treatment separation membrane packaging container of claim 6, wherein the water treatment separation membrane is a cylindrical water treatment separation membrane module.
